# EUROPEAN PATENT SPECIFICATION

(11) **EP 1 887 457 B1**
(45) Date of publication and mention of the grant of the patent: **22.05.2013**
(21) Application number: 06016711.1
(22) Date of filing: 10.08.2006
(51) Int. Cl.: G06F 3/147

(54) **Display system of a vehicle electronic system**
Anzeigesystem eines Elektroniksystems eines Fahrzeugs
Système d'affichage pour un système électronique pour véhicule

(43) Date of publication of application: 13.02.2008
(73) Proprietor: Harman Becker Automotive Systems GmbH, 76307 Karlsbad (DE)
(72) Inventor: Sitter, Michael-Klaus, 76327 Pfinztal (DE); Gültekin, Serdar, 75172 Pforzheim (DE); Goering, Stefan, 76307 Karlsbad (DE)
(74) Representative: Bertsch, Florian Oliver

(56) References cited:
- WO-A2-2004/003687
- WO-A2-2006/020219
- US-A- 5 850 416
- US-A- 6 118 426
- US-A1- 2002 167 500
- US-A1- 2004 056 856
- US-A1- 2006 071 925
- US-A1- 2006 139 283

## Description

### Field of the invention

This invention relates to a display. The invention relates especially to liquid crystal displays. The invention can find application in electronic systems having a display used in vehicles.

### Related art

In recent years electronic systems have come more and more sophisticated and often comprise a display allowing the control of the different functions of the electronic system. Additionally, displays of television or computer systems are known, these displays often having a low width compared to conventionally used cathode ray tubes. These flat screen display systems are normally based on the liquid crystal display technology or on the plasma display technology. Especially in vehicles the use of such flat screen displays is proliferating. Many vehicles use navigation systems guiding the user from the present position to a predetermined destination. The driving indications are often displayed to the driver.

Additionally, the transponder technology is known, the term "transponder" being a combination of the expressions "transmitter" and "responder". A transponder receives and transmits radio signals at a prescribed frequency range. After receiving the signal, a transponder will at the same time broadcast the signal at a different frequency. Transponders are used in satellite communications and are used for locating or identifying goods.

The development of the transponder technology has been supported in particular by the radio frequency identification technology (RFID) used in a broad range of applications worldwide including access control, automotive, document tracking, product identification, retail, sports timing, ticketing, wireless payment and the like. The RFID technology in principle is similar to a coded identification. With RFID, electromagnetic or electrostatic coupling in the radio frequency portion of the electromagnetic spectrum is used to transmit signals. Accordingly, an RFID systems comprises an antenna and a transceiver which reads the radio frequency and transfers the information to a reading device, and a transponder or tag which in most cases is an integrated circuit containing the RF circuitry and the information to be transmitted.

A liquid crystal display (LCD) is a display made of any number of color or monochrome pixels arrayed in front of a light source or reflector, each pixel comprising a column of liquid crystal molecules suspended between transparent electrodes and two polarizing filters, the axis of polarity of which are perpendicular to each other. By applying small electrical charges to transparent electrodes over each pixel, the molecules are twisted by electrostatic forces. These changes of twist of the light passing through the molecules allows varying degree of light to pass or not to pass through the polarizing filters. Usually at least one transistor is used for controlling the supply of electrical charges to the electrodes. In the art the liquid crystal display is electrically connected to a control unit which may be provided on a printed circuit board. To this end an array of connecting pins a heat seal or a rubber is provided for connecting the display to the printed circuit board (PCB). The connecting technology connecting the display to the printed circuit board providing the control signals is difficult. There is a risk that the mechanical or electrical contact cannot be achieved during manufacturing. Furthermore, the electrical contact may be damaged, or dust may deteriorate the electrical connection. Furthermore, the electrical contacts of the display have to be aligned with a high accuracy in order to get in contact with the receiving contacts of the printed circuit board to which the liquid crystal display is connected. As a consequence, the tolerances in the manufacturing process for the contact elements have to be low, resulting in expensive manufacturing techniques.

Document W02006/020219 A2 shows a vehicle console capable of wireless reception and transmission of audio and video data to one or more displays positioned anywhere in the vehicle.

Document US2002/0167500 A1 discloses a smart electronic label employing electronic ink. The label is flexible and can be remotely updated by using an activator module.

Accordingly, a need exists to provide a display system which is easy to install and which can be manufactured at low cost.

### Summary

This need is met by the features of the independent claims. In the dependent claims preferred embodiments of the invention are described.

According to the invention, a display system is provided comprising a transmitting unit, the transmitting unit comprising a power supply, a display signal generating unit and a transmitter for wireless transmission of the display signal and for transmission of the supplied power. The display system further comprises a receiving unit, the receiving unit comprising a receiver receiving the transmitted display signal, the receiver furthermore coupling to the power supplied from the transmitter for power supply of the receiving unit. The receiving unit further comprises a control unit decoding the received display signal and a display displaying the decoded display signal. Due to the wireless transmission of the display signal and due to the fact that the power supply of the transmitting unit is used in the receiving unit, an electrical connection between the display in the receiving unit and the transmitting unit can be omitted. It is not necessary any more to electrically connect the display to a printed circuit board on which the control components for controlling the functioning of the display are arranged. Electrical contacts accessible from outside the display need not to be provided in the receiving unit comprising the display. Accordingly, it is possible to provide a receiving unit in which the display is arranged in which no electrical contacts are provided on the outside surface. This greatly facilitates the manufacturing of the display. Furthermore, time-consuming and difficult connection of the connecting elements of the display to the connecting elements of the display signal generating unit can be avoided. With the presently claimed invention it is possible to also provide a removable display which can be easily removed and put into place.

Further advantages of the invention are that the mobile receiving unit can be protected more efficiently against ESD (electrostatic discharge) compared to displays which are electrically connected to the signal generating unit.

Furthermore, the contacts connecting the display to the signal generating unit cannot deteriorate as these contacts need not to be provided.

Furthermore, it is possible to completely seal the transmitting and receiving unit to render them waterproof so that the invention can also be applied outside (e.g. on motorbikes).

In the prior art the removal of the display was normally not possible for the user as the electrical connection between the PCB and the connecting elements of the display was a difficult task.

According to a preferred embodiment of the invention, the display is a liquid crystal display. These displays have the advantage that they use very small amounts of electric power. Accordingly, it is possible to drive a liquid crystal display using the power supplied via wireless transmission from a remote power supply.

Preferably, the transmitter transforms the display signal and the supplied power in an energy field transmitted to the receiving unit, the receiver receiving the transmitted energy field extracts the display signal and supplies the received power to the receiving unit for the power supply of the receiving unit. The receiving unit operates on the energy received from the energy field provided by the power supply of the transmitting unit. In this context, the power supply corresponds to a power supply in the transponder technology described in the introductory part of the description. However, in this invention the received power is not used to transmit back a signal identifying the receiver as it is the case in the transponder technology, but the received power is used to drive the control unit decoding the received display signal and to drive the display displaying the decoded display signal. Even if the receiving unit comprising the display is supplied by the transmitting unit, the receiving unit may also comprise an energy storage unit storing the energy received from the transmitting unit, but this storage unit is not a power supply as provided in the transmitting unit, the storage unit simply stores the received energy for further usage.

Preferably, the transmitter transmits a radio frequency signal which is transmitted to the receiving unit, the radio frequency signal being modulated in order to comprise the display signal. In liquid crystal displays a signal is needed for each transistor provided in the display. According to a preferred embodiment, the display signal is transmitted as serial data in a communication protocol to the receiving unit, the receiving unit decoding the protocol and transmitting the decoded display signal to each of the transistors of the liquid crystal display. For transmitting the radio frequency, the transmitter preferably comprises an antenna. The antenna of the transmitter can be a track of the printed circuit board, however, any other way of providing the antenna in the transmitting unit is possible. The antenna of the receiver receiving the radio frequency signal may be a conductor incorporated into a glass structure of the liquid crystal display. However, it is also possible that the antenna of the receiver is a conductive paste on the glass surface of the liquid crystal display. Furthermore, a conventional antenna not integrated in one of the components can be used.

As the receiving unit need not to be directly coupled to the transmitting unit and as a physical connection of the display to the display signal generating unit is not necessary in view of the wireless signal transmission, the display can be a removable display which can be removed from a support structure to which the display is mounted.

In order to further simplify the display system, the control unit of the receiver can be mounted to the glass structure of the liquid crystal display using the chip-on-glass technology. In the chip-on-glass technology, the bonding and connection techniques are used in which the different electrical connections from the control unit receiving the display signal to the different transistors controlling the pixel are integrated into the glass structure.

Furthermore, it is possible to use a circuit with a conventional printed circuit board on conventional electronic components.

According to another embodiment of the invention, the display is a display of a vehicle electronic system such as a vehicle navigation system. In this case, the display can be designed as a removable display which can be removed by the user in an easy way. The user need not to pay attention whether an electrical connection between the printed circuit board comprising the signal generating unit and the display could be obtained when the display is connected to a support structure to which the display is coupled.

Further advantages, details and modes for carrying out this invention shall become apparent from the description of the preferred embodiments with reference to the accompanying drawings, in which

### Brief description of the drawings

Fig. 1 shows a schematic block diagram of the display system of the invention, and
Fig. 2 shows a flowchart illustrating the steps for a method for displaying a signal on the display system of Fig. 1.

### Detailed description of preferred embodiments

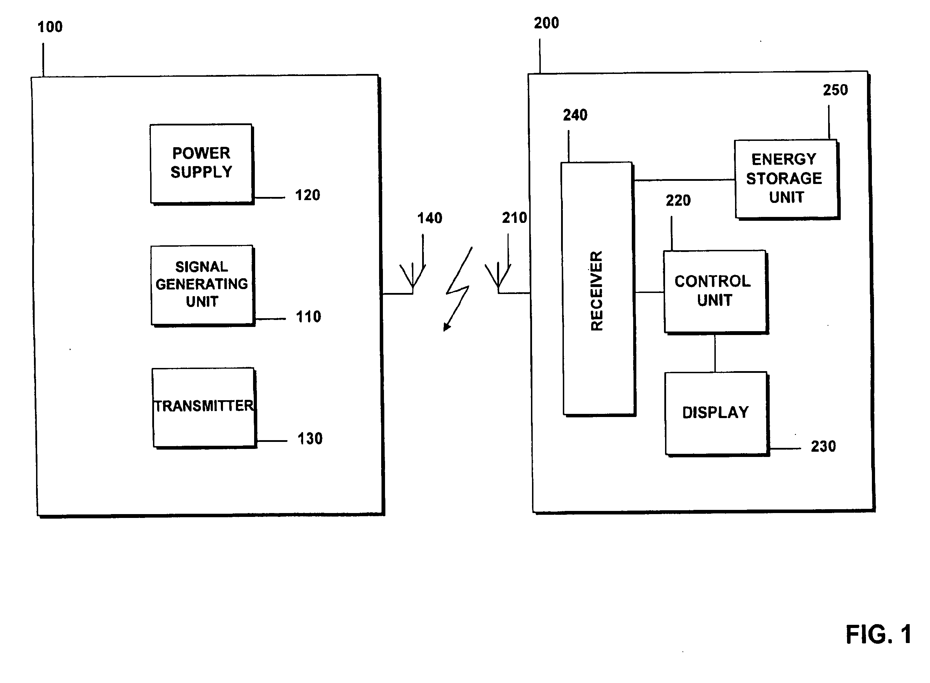

The display system as shown in Fig. 1 comprises a transmitting unit 100. The transmitting unit 100 can be part of a printed circuit board provided in an electronic system. The transmitting unit comprises a display signal generating unit 110 where the signals to be displayed are generated. The system shown in Fig. 1 is a display system of a liquid crystal display. In these systems an array of signals is generated using a signal protocol, the protocol comprising the different control signals for each transistor of the liquid crystal display. Furthermore, a power supply 120 is provided supplying power to the transmitting unit. A transmitter 130 is provided used for wireless transmission of a generated display signal to the receiving unit 200. The transmitting unit 100 furthermore comprises an antenna 140, the antenna emitting a modulated radio frequency signal. The modulated radio frequency signal comprises the display signal information, the RF signal being an energy field, the energy of which is used in a receiving unit 200 for supplying power to the different components of the receiving unit 200. For the transmission of energy from the transmitter to the receiver, an electromagnetic or electrostatic coupling from the transmitter to the receiver is necessary. In the embodiment shown the coupling is an inductive coupling, the receiving unit comprising an antenna 210 receiving the transmitted radio frequency signal. The frequency of the radio frequency signal used for transmitting the signal and the energy may depend on the distance provided between the transmitting unit 100 and the receiving unit 200. Preferably, the antennas of both systems are positioned in such a way that an optimum coupling between the two antennas is possible. By way of example, the distance between the transmitting unit and the receiving unit can be in the range of millimeters to centimeters. It is clear that the closer the distance between the two antennas the better the energy can be transmitted from the transmitting unit 100 to the receiving unit 200.

The receiving unit 200 comprises a receiver which receives the transmitted radio frequency signals. The received radio frequency signal is then transmitted to a control unit where the received signal is decoded and the display signal can then be transmitted to the display 230 itself. In case of a liquid crystal display the power consumption of the units provided in the receiving unit 200 is very small, so that the energy extracted from the radio frequency signal is enough for driving the receiver 240, the control unit 220 and the display 230 itself. The receiving unit may furthermore comprise an energy storage unit 250 for storing the energy received via the antenna 210. The energy storage unit can be used when energy is needed in the receiving unit 200, but no signal is received from the transmission unit 100. The energy storage unit 250 may be a rechargeable battery or the like. The control unit controls all aspects of the display, i.e. the energizing of the display, the power management and the signal decoding.

According to one embodiment of the invention, the integration of the control unit and the receiver in the liquid crystal display is possible. In this case, the controlling of the display, the decoding of the received signal and the controlling of the power supply received by the antenna can be incorporated into one chip which is provided on the glass structure using the chip-on-glass technology.

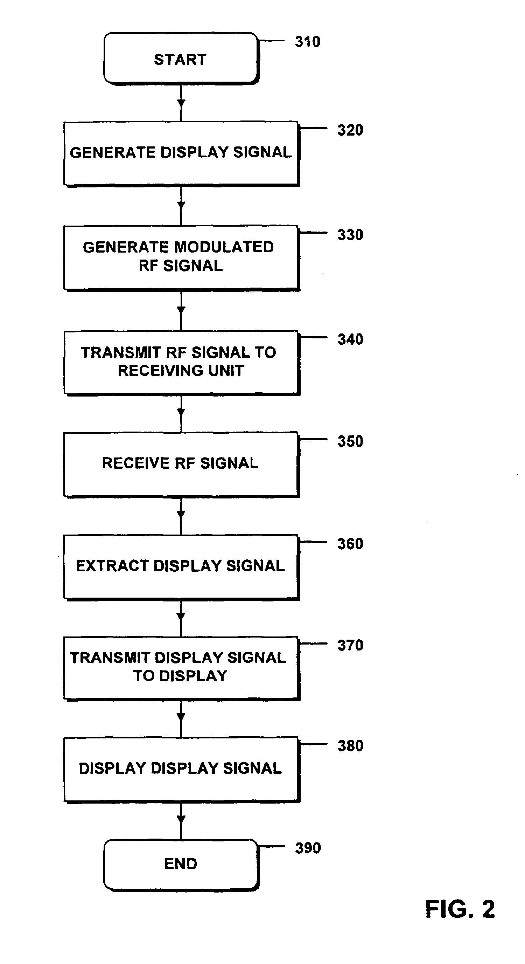

In Fig. 2 a flowchart is shown showing the different steps for displaying a signal on the display 230. After the start of the process in step 310, the display signal is generated in the signal generating unit in step 320. As discussed in connection with Fig. 1, the signal may be a serially transmitted signal transmitted by a predetermined protocol. In step 330 a modulated RF signal is generated comprising the information of the generated display signal. This RF signal is then transmitted to the receiving unit in step 340, the signal being received in the receiving unit in step 350. In the receiving unit the display signal is extracted in the control unit in step 360, the control unit being driven by the energy extracted from the transmitted RF signal. After the signal extraction the display signal is transmitted to the display in step 370, and last but not least in step 380 the decoded display signal is displayed on the display itself. The process ends in step 390.

The invention provides a display system in which a wired electrical connection between the display and the signal generating unit is not necessary. The omission of this wired connection has several advantages, as the electric connection of the display to the printed circuit board on which the signal generating unit is normally provided is a difficult task and complicates the manufacturing process of the display system. The problem that the electrical contacts of the transmitter and the receiver may be misaligned relative to each other can be avoided, furthermore the tolerances of the geometrical dimensions of the different components need not to be as small in the wireless transmission display as in the display known in the art.

## Claims

1. Display system of a vehicle electronic system, comprising:
• a transmitting unit (100), the transmitting unit being part of a printed circuit board provided in the vehicle electronic system and comprising:
- a power supply (120),
- a display signal generating unit (110),
- a transmitter (130) for wireless transmission of the display signal and of power supplied by the power supply (120),
• a receiving unit (200), comprising:
- a receiver (240) receiving the transmitted display signal and also receiving the power supplied from the transmitter for supplying power to the receiving unit,
- a control unit (220) decoding the received display signal,
- a display (230) displaying the decoded display signal, the display being a liquid crystal display, the display being the display of the vehicle electronic system.

2. Display system according to claim 1, **characterized in that** the transmitter (130) transforms the display signal and the supplied power in an energy field transmitted to the receiving unit where the receiver (240) receives the transmitted energy field extracts the display signal and supplies the received power to the receiving unit.

3. Display system according to any of the preceding claims, **characterized in that** the transmitter (130) comprises an antenna (140) emitting a radio frequency signal, the receiver comprising an antenna coupling to the radio frequency signal.

4. Display system according to claim 3, **characterized in that** antenna (140) of the transmitter is a printed circuit board track.

5. Display according to claim 3 or 4, **characterized in that** the antenna (210) of the receiver (200) is a conductor incorporated into a glass structure of the liquid crystal display.

6. Display according to any of claims 3 to 5, **characterized in that** the antenna (210) of the receiver is a conductive paste on the glass surface of the liquid crystal display.

7. Display system according to any of the preceding claims, **characterized in that** the display (230) is a removable display which can be removed from a support structure.

8. Display system according to any of the preceding claims **characterized in that** the control unit of the receiver unit is mounted to a glass structure of the liquid crystal display using the chip-on-glass technology.

## Patentansprüche

1. Anzeigesystem eines Fahrzeugelektroniksystems, umfassend:
• eine Sendeeinheit (100), wobei die Sendeeinheit Teil einer gedruckten Leiterplatte ist, die in dem Fahrzeugelektroniksystem vorgesehen ist, und umfassend:
- eine Leistungsversorgung (120),
- eine Anzeigesignalerzeugungseinheit (110),
- einen Sender (130) zum drahtlosen Senden des Anzeigesignals und der Leistung, die von der Leistungsversorgung (120) bereitgestellt wird,
• eine Empfangseinheit (200), umfassend:
- einen Empfänger (240), der das gesendete Anzeigesignal empfängt und außerdem die Leistung empfängt, die von dem Sender bereitgestellt wird, um die Empfangseinheit mit Leistung zu versorgen,
- eine Steuereinheit (220), die das empfangene Anzeigesignal decodiert,
- eine Anzeige (230), die das decodierte Anzeigesignal anzeigt, wobei die Anzeige eine Flüssigkristallanzeige ist, wobei die Anzeige die Anzeige des Fahrzeugelektroniksystems ist.

2. Anzeigesystem nach Anspruch 1, **dadurch gekennzeichnet, dass** der Sender (130) das Anzeigesignal und die gelieferte Leistung in ein Energiefeld umwandelt, das an die Empfangseinheit gesendet wird, wobei der Empfänger (240) das gesendete Energiefeld empfängt, das Anzeigesignal extrahiert und die empfangene Leistung an die Empfangseinheit bereitstellt.

3. Anzeigesystem nach einem der vorangehenden Ansprüche, **dadurch gekennzeichnet, dass** der Sender (130) eine Antenne (140) umfasst, die ein Funkfrequenzsignal abstrahlt, wobei der Empfänger eine Antenne umfasst, die an das Funkfrequenzsignal gekoppelt ist.

4. Anzeigesystem nach Anspruch 3, **dadurch gekennzeichnet, dass** die Antenne (140) des Senders eine Bahn auf einer gedruckten Leiterplatte ist.

5. Anzeige nach Anspruch 3 oder 4, **dadurch gekennzeichnet, dass** die Antenne (210) des Empfängers (200) ein Leiter ist, der in eine Glasstruktur der Flüssigkristallanzeige eingebaut ist.

6. Anzeige nach einem der Ansprüche 3 bis 5, **dadurch gekennzeichnet, dass** die Antenne (210) des Empfängers eine leitfähige Paste an der Glasfläche der Flüssigkristallanzeige ist.

7. Anzeigesystem nach einem der vorangehenden Ansprüche, **dadurch gekennzeichnet, dass** die Anzeige (230) eine abnehmbare Anzeige ist, die von einer tragenden Struktur abgenommen werden kann.

8. Anzeigesystem nach einem der vorangehenden Ansprüche, **dadurch gekennzeichnet, dass** die Steuereinheit der Empfängereinheit mittels Chip-auf Glas-Technik an einer Glasstruktur der Flüssigkristallanzeige angebracht ist.

## Revendications

1. Système d'affichage d'un système électronique de véhicule, comprenant :
• une unité de transmission (100), l'unité de transmission faisant partie d'une carte à circuit imprimé prévue dans le système électronique de véhicule et comprenant :
- une alimentation électrique (120),
- une unité de production de signaux d'affichage (110),
- un émetteur (130) permettant une transmission sans fil du signal d'affichage et de la puissance électrique fournie par l'alimentation électrique (120),
• une unité de réception (200), comprenant :
- un récepteur (240) recevant le signal d'affichage transmis et recevant aussi la puissance fournie depuis l'émetteur, pour fournir de la puissance à l'unité de réception,
- une unité de commande (220) décodant le signal d'affichage reçu,
- un affichage (230) affichant le signal d'affichage décodé, cet affichage étant un affichage à cristaux liquides, et cet affichage constituant l'affichage du système électronique de véhicule.

2. Système d'affichage selon la revendication 1, **caractérisé en ce que** l'émetteur (130) transforme le signal d'affichage et la puissance fournie en un champ d'énergie transmis à l'unité de réception où le récepteur (240) reçoit le champ d'énergie transmise, extrait le signal d'affichage et conduit la puissance reçue jusqu'à l'unité de réception.

3. Système d'affichage selon l'une quelconque des revendications précédentes, **caractérisé en ce que** l'émetteur (130) comprend une antenne (140) émettant un signal de radiofréquence, ce récepteur comprenant une antenne de couplage au signal de radiofréquence.

4. Système d'affichage selon la revendication 3, **caractérisé en ce que** l'antenne (140) de l'émetteur est une piste de carte de circuit imprimé.

5. Système d'affichage selon la revendication 3 ou 4, **caractérisé en ce que** l'antenne (210) du récepteur (200) est un conducteur incorporé dans une structure vitrée de l'affichage à cristaux liquides.

6. Système d'affichage selon l'une quelconque des revendications 3 à 5, **caractérisé en ce que** l'antenne (210) du récepteur est une pâte conductrice appliquée sur la surface vitrée de l'affichage à cristaux liquides.

7. Système d'affichage selon l'une quelconque des revendications précédentes, **caractérisé en ce que** l'affichage (230) est un affichage amovible qu'on peut retirer d'une structure support.

8. Système d'affichage selon l'une quelconque des revendications précédentes, **caractérisé en ce que** l'unité de commande de l'unité réceptrice est montée sur une structure vitrée de l'affichage à cristaux liquides selon la technologie « puce sur verre ».
